# EUROPÄISCHE PATENTSCHRIFT

(11) **EP 0 542 047 B1**
(45) Veröffentlichungstag und Bekanntmachung des Hinweises auf die Patenterteilung: **13.03.1996**
(21) Anmeldenummer: 92118479.2
(22) Anmeldetag: 29.10.1992
(51) Int. Cl.: H04M 11/00, H04Q 11/04, H04N 7/16

(54) **Kommunikationssystem**
Communication system
Système de communication

(30) Priorität: 28.05.1992 DE 4217649; 13.11.1991 DE 4137225
(43) Veröffentlichungstag der Anmeldung: 19.05.1993
(73) Patentinhaber: TELENORMA GMBH, D-60326 Frankfurt am Main (DE)
(72) Erfinder: Drehsen, Axel, W-5168 Nideggen (DE); Trappe, Horst, W-5000 Köln 71 (DE); Döbold, Herbert, W-5000 Köln 71 (DE); Franke, Klaus, Dipl.-Ing., W-5042 Erftstadt 12 (DE)

(56) Entgegenhaltungen:
- EP-A- 0 177 968
- EP-A- 0 408 024
- DE-A- 3 438 293
- DE-A- 3 503 452
- DE-A- 3 926 107

## Beschreibung

Die Erfindung betrifft ein Kommunikationssystem für Krankenhäuser und Pflegeheime bestehend aus einer Vielzahl von raumindividuellen Fernsteuereinrichtungen, die über digitale Teilnehmeranschlüsse einer digitalen Fernmeldevermittlungsanlage mit einer zentralen Erfassungs- und Steuereinrichtung verbindbar sind, wobei die jeweils einem im Raum befindlichen Fernsehgerät zugeordnete Fernsteuereinrichtung zur Auslösung von Steuervorgängen in demselben dient, die vom Patienten beispielsweise über die Wähltastatur eines an der Fernmeldevermittlungsanlage angeschlossenen Fernsprechapparates veranlaßt werden, und die Dauer der Benutzung patientenindividuell erfaßbar ist.

Ein derartiges Kommunikationssystem ist bereits bekannt, so wird in der DE-PS 34 38 293 eine Vorrichtung zur Freigabe von Fernsehgeräten beschrieben, bei welcher die Fernsteuereinrichtung als Zusatzeinrichtung an einem digitalen Fernsprechapparat der digitalen Fernmeldevermittlungsanlage angeschlossen ist. Dabei erfolgt die Steuerung des an der Fernsteuereinrichtung angeschlossenen Fernsehgeräts über die Wähltastatur eines Fernsprechapparates, wobei die durch eine besondere Ausscheidungsziffer gekennzeichnete Wahlinformation der zentralen Erfassungs- und Steuereinrichtung über die digitale Fernmeldevermittlungsanlage übermittelt wird, die daraufhin eine zeitabhängige Benutzung des Fernsehgeräts für den Anschlußinhaber des Eingabefernsprechapparates erfaßt und entsprechende Steuersignale erzeugt, die über die digitale Vermittlungsanlage, und zwar den Datenkanal der Anschlußleitung des digitalen Fernsprechapparates zur angeschlossenen Fernsteuereinrichtung übermittelt werden.

Da der Zugriff zum Fernsprechapparat nicht besonders gesichert ist, besteht auch die Möglichkeit der mißbräuchlichen Benutzung des Fernsehgeräts, wodurch dem Anschlußinhaber ein finanzieller Schaden entstehen kann, wenn die Benutzung des Fernsprechapparates oder des Fernsehgeräts kostenpflichtig ist.

Die Aufgabe besteht nun darin, die bekannte Vorrichtung mit zusätzlichen Funktionen zu versehen, insbesondere die mißbräuchliche Benutzung des Fernsehgeräts oder auch des Fernsprechapparates zu verhindern.

Diese Aufgabe wird dadurch gelöst, daß die Fernsteuereinrichtungen mehrerer Räume über eine gemeinsame Datenleitung jeweils mit einem digitalen Fernsprechapparat verbunden sind, daß die jeweils als analoge Fernsprechapparate ausgebildeten benutzerindividuellen Fernsprechapparate an der digitalen Fernmeldevermittlungsanlage über jeweils eine analoge Teilnehmeranschlußleitung angeschlossen sind und daß jeweils ein einem analogen Fernsprechapparat zugeordneter Kartenleser an der Fernsteuereinrichtung angeschlossen ist.

Diese Aufgabe wird auch dadurch gelöst, daß eine Umsetzeinrichtung als Endeinrichtung mit dem digitalen Teilnehmeranschluß einer digitalen Fernmeldenebenstellen-Vermittlungsanlage verbunden ist, daß eine Fernsteuereinrichtung und mehrere digitale Fernsprechapparate jeweils über eine gemeinsame Datenleitung an der Umsetzeinrichtung angeschlossen sind und daß jeweils ein einem digitalen Fernsprechapparat zugeordneter Kartenleser an der Fernsteuereinrichtung angeschlossen ist.

Die erfindungsgemäßen Anordnungen von Fernsteuereinrichtungen und Fernsprechapparaten in Verbindung mit einer digitalen Fernmeldevermittlungsanlage ermöglichen gegenüber dem Stand der Technik, bei welchem nur eine auf eine Übertragungsrichtung beschränkte Informationsübertragung benötigt wurde, eine Vielzahl neuer Anwendungsmöglichkeiten, vor allem in Verbindung mit einem Kartenleser.

Eine Weiterbildung der Erfindung besteht darin, daß an einer Fernsteuereinrichtung jeweils mehrere Kartenleser angeschlossen sind und daß in Abhängigkeit von Informationen einer in einen Kartenleser eingeführten Karte eine benutzerindividuelle Benutzung des Fernsehgeräts oder eines dem Kartenleser zugeordneten Fernsprechapparates freigebbar ist.

Durch die Verwendung einer persönlichen Karte, beispielsweise Chip-Karte, ist die Benutzung des Fernsehgeräts auf den Anschlußinhaber beschränkt, da dieser jederzeit, beispielsweise bei Verlassen des Raumes, die Karte aus dem Kartenleser entfernen kann. Das gleiche gilt für eine Guthabenkarte. In beiden Fällen kann über die Karte auch die Benutzung des Fernsprechapparates oder des Fernsehgeräts freigegeben werden.

Vorteilhafte Weiterbildungen der Erfindung ergeben sich aus den Unteransprüchen.

Die Erfindung wird anhand von Ausführungsbeispielen näher erläutert, welche in der Zeichnung dargestellt sind.

Es zeigt:
- Fig. 1: das Blockschaltbild eines Kommunikationssystems, bei welchem benutzerindividuelle Bett-Bediengeräte mit eingebautem Kartenleser mehrerer Räume über Fernsteuereinrichtungen an einem digitalen Fernsprechapparat angeschlossen sind,
- Fig. 2: das Blockschaltbild eines Kommunikationssystems, bei welchem die benutzerindividuellen Kartenleser und Bett-Bediengeräte getrennte Einrichtungen sind,
- Fig. 3: das Blockschaltbild eines Kommunikationssystems, bei welchem die Einrichtungen eines Raumes über eine Umsetzeinrichtung an einer digitalen Fernmeldenebenstellenvermittlungsanlage angeschlossen sind
und
- Fig. 4: das Blockschaltbild einer Fernsteuereinrichtung.

An einer digitalen Fernmeldevermittlungsanlage V sind digitale Fernsprechapparate TD1 bis TDx angeschlossen. In einem Krankenhaus z. B. kann ein digitaler Fernsprechapparat TD jeweils in einer Station angeordnet sein. Die digitale Anschlußleitung DA weist zwei Nutz- oder Sprachkanäle und einen Datenkanal zur Übertragung von Daten und Signalisierungsinformationen auf. Die Übertragungsrate der Sprachkanäle beträgt beispielsweise 64 kbit/s und diejenige des Datenkanals 16 kbit/s. Die Datenleitung DL1, die am digitalen Fernsprechapparat TD1 angeschlossen ist, verbindet die Fernsteuereinrichtungen FS sämtlicher Patientenzimmer der betreffenden Station mit dem digitalen Fernsprechapparat TD1. Die Datenübertragungsrate auf der Datenleitung DL1 kann beispielsweise 16 kbit/s betragen, es ist jedoch auch denkbar, andere Übertragungsgeschwindigkeiten zu wählen, wobei jedoch in der digitalen Fernsprechteilnehmerstation TD eine entsprechende Geschwindigkeitsumwandlung stattfinden muß.

Zur Übertragung von Daten von einer Fernsteuereinrichtung FS zur zentralen Erfassungs- und Steuereinrichtung EST bzw. umgekehrt wird eine Verbindung zwischen dem Teilnehmeranschluß des digitalen Fernsprechapparates TD1 der Fernmeldevermittlungsanlage V und der zentralen Erfassungs- und Steuereinrichtung EST vorausgesetzt, wenn über einen Sprachkanal ein Informationsaustausch, beispielsweise größerer Datenmengen erfolgen soll. In diesem Fall muß die zentrale Erfassungs- und Steuereinrichtung EST auch einen Teilnehmeranschluß an der Fernmeldevermittlungsanlage V aufweisen. Wird dagegen der Signalisierungskanal zur Datenübertragung herangezogen, so werden bekanntlich dessen Informationen nicht dem Koppelfeld der Fernmeldevermittlungsanlage V zugeführt, sondern dieselben in der nicht gezeigten Teilnehmeranschlußschaltung bei ankommenden Informationen herausgenommen und direkt der Steuereinrichtung ST der Fernmeldevermittlungsanlage V zugeführt bzw. die Informationen von der Steuereinrichtung ST der Teilnehmeranschlußleitung in der Teilnehmeranschlußschaltung wieder hinzugeführt.

An der Datenleitung DL ist auch ein Datensender DS angeschlossen, welcher die von einem Lesestift aufgenommenen Informationen , beispielsweise über den Datenkanal der betreffenden digitalen Anschlußleitung DA zur zentralen Erfassungs- und Steuereinrichtung EST übermittelt. Mit Hilfe des Lesestiftes können durch Verwendung von Balkencode-Etiketten auf einfache Weise patientenbezogene Daten erfaßt werden. Hierunter ist beispielsweise die Berechtigung zur Benutzung des Fernsehgeräts oder eines Fernsprechapparates für einen bestimmten Benutzer zu verstehen, weiterhin ist auf diese Weise die einfache Zuordnung von Patient zu Bett zu Zimmer zu Station möglich. Der Datensender DS kann derart ausgebildet sein, daß während des Aufladens des Energiespeichers des Lesestiftes die Daten aus dem Speicher desselben ausgelesen und über die Datenleitung DL auf die Teilnehmeranschlußleitung DA übertragen werden.

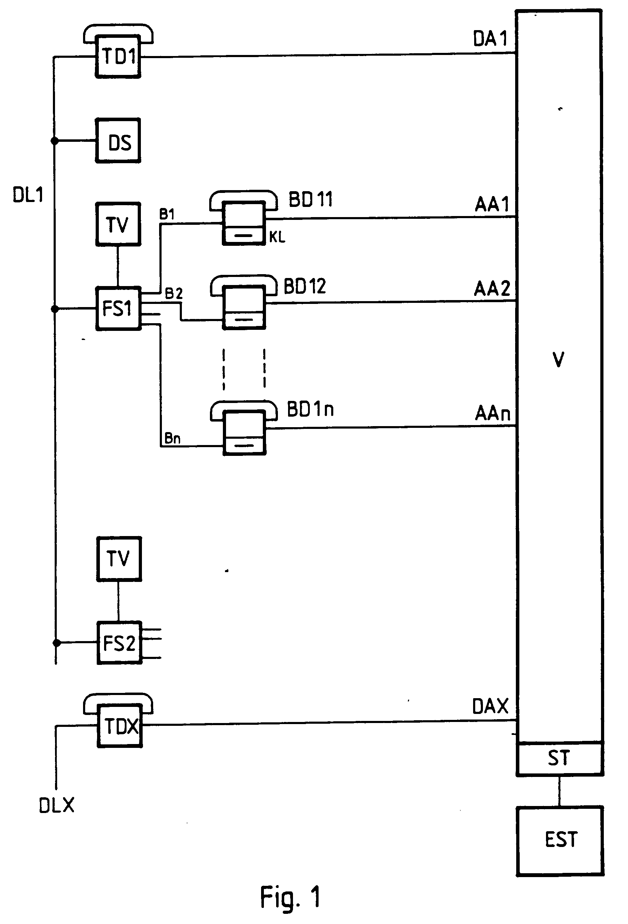

Bei dem in Fig. 1 gezeigten Ausführungsbeispiel wird davon ausgegangen, daß pro Patient in einem Raum ein sogenanntes Bett-Bediengerät BD vorhanden ist, welches einen Kartenleser KL aufweist. Bei den Fernsprechapparaten des Bett-Bediengeräts BD kann es sich beispielsweise um einfache analoge Fernsprechapparate handeln, die über eine analoge Anschlußleitung AL mit der digitalen Fernmeldevermittlungsanlage V verbunden sind.

Die Kartenleser KL und die nicht gezeigten Bedienelemente des Bett-Bediengeräts BD sind mit der Fernsteuereinrichtung FS des betreffenden Raums verbunden, an welcher auch das im Raum befindliche Fernsehgerät DV angeschlossen ist.

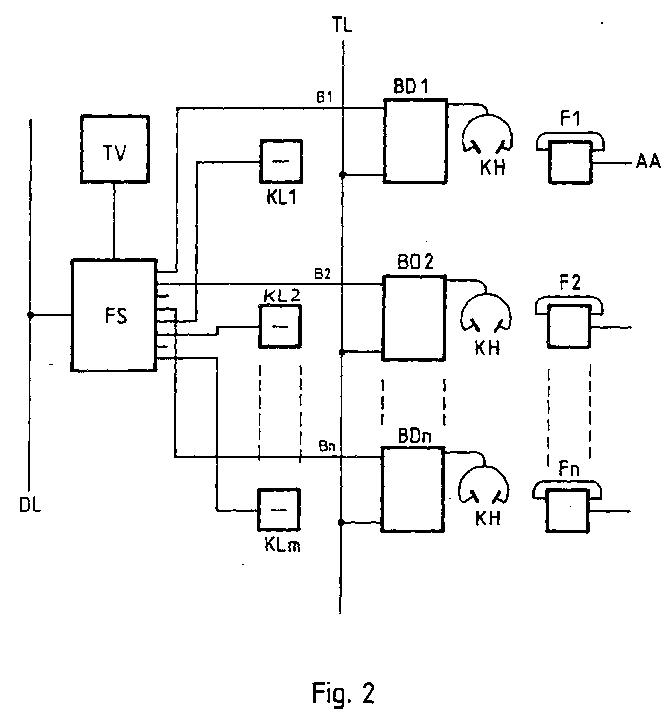

Einen anderen Aufbau des Kommunikationssystems zeigt das Blockschaltbild in Fig. 2, bei welchem die Kartenleser KL, die Bett-Bediengeräte BD und die Fernsprechapparate FF getrennte Einrichtungen sind. Bei den Fernsprechapparaten FF handelt es sich wiederum um einfache analoge Fernsprechapparate. Die Bett-Bediengeräte BD weisen nicht gezeigte Tonleitungsauswahleinrichtungen auf, um jeweils eine von verschiedenen Tonleitungen TL mit dem Kopfhörer KH zu verbinden. Das Bett-Bediengerät BD ist auch mit der Fernsteuereinrichtung FS verbunden, um den Tonausgang des Fernsehgeräts TV mit dem Kopfhörer KH eines Bett-Bediengeräts BD zu verbinden.

Wie in der Patentanmeldung P 42 17 648.4 (mit gleichem Anmeldedatum) beschrieben, kann die Bett-Bedieneinrichtung BD auch Bedientasten aufweisen, mit welchen die Kanalauswahl des Fernsehgeräts TV und die Lautstärke des Fernsehtons im Kopfhörer KH steuerbar ist. Weiterhin ist pro Benutzer ein Kartenleser KL vorhanden, welcher ebenfalls mit der Fernsteuereinrichtung FS verbunden ist.

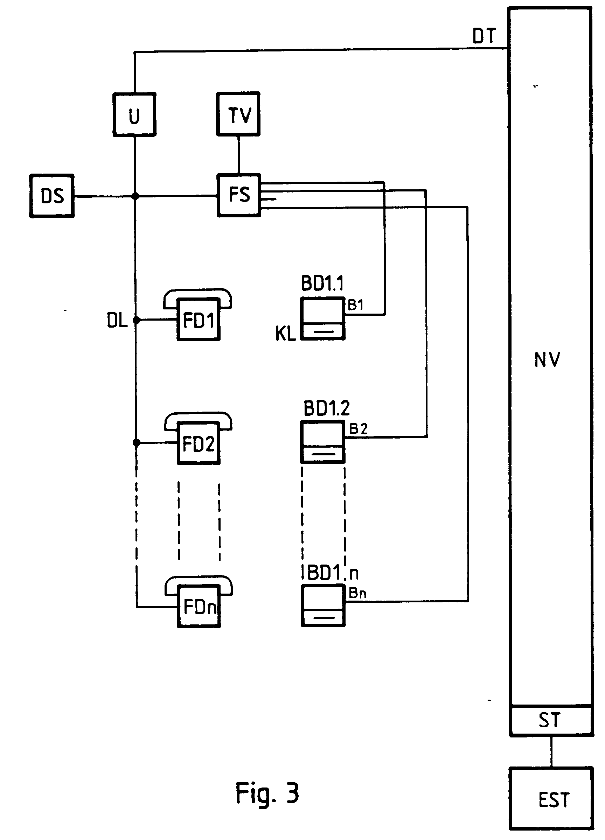

Eine andere Konfiguration des Kommunikationssystems wird in Fig. 3 gezeigt. Bei diesem Ausführungsbeispiel wird davon ausgegangen, daß es sich bei der digitalen Fernmeldevermittlungsanlage um eine digitale Fernmeldenebenstellen-Vermittlungsanlage NV handelt. Zum Anschluß von Endgeräten sind digitale Teilnehmeranschlüsse DT vorhanden, die bekanntlich bei einer digitalen Fernmelde-Nebenstellenvermittlungsanlage als sogenannte U_{PO} -Schnittstelle ausgebildet sind. An einem derartigen Teilnehmeranschluß ist eine Umsetzeinrichtung U angeschlossen, die eine entsprechende Schnittstelle aufweist. An der Umsetzeinrichtung U ist eine Datenleitung DL, und zwar in Form einer sogenannten S_{O}- Schnittstelle angeschlossen. Eine derartige Schnittstelle ist bereits unter dem Namen ISDN-PTBA (private termination basic access) bekannt und wird beispielsweise in der Druckschrift "BOSCH-TELECOM- ÖFFENTLICHE Vermittlungstechnik GMBH-Fachberichte zur Cebit'90 " auf den Seiten 41 und 42 beschrieben.

An dieser Datenleitung DL sind eine Fernsteuereinrichtung FS und mehrere digitale Fernsprechapparate FD1 bis FDn angeschlossen, und zwar sämtliche Fernsprechapparate eines Patientenzimmers, in welchem sich auch das an der dazugehörigen Fernsteuereinrichtung FS angeschlossene Fernsehgerät TV befindet. Für jeden Patienten ist nicht nur ein Fernsprechapparat FD, sondern auch ein Bett-Bediengerät BD und ein Kartenleser KL vorhanden. Die Bett-Bediengeräte BD1 bis BDn sind jeweils über eine individuelle Busleitung B mit der Fernsteuereinrichtung FS verbunden. Der Kartenleser KL kann einen Teil des Bett-Bediengeräts BD bilden, es ist jedoch auch denkbar, diesen getrennt aufzustellen und mit einer eigenen Leitung mit der Fernsteuereinrichtung FS zu verbinden, wie dies in Fig. 2 gezeigt ist. Das Bett-Bediengerät weist einen nicht gezeigten Kopfhörer auf, wie er ebenfalls in Fig. 2 dargestellt ist.

Dabei kann der Kartenleser KL eine Anzeigevorrichtung aufweisen, welche zur Anzeige des betreffenden Guthabens dient, welches entweder auf der Karte selbst, in der Fernsteuereinrichtung FS oder auch in der zentralen Erfassungs- und Steuereinrichtung EST eingespeichert ist. Die Steuerung der Anzeige erfolgt in jedem Fall durch die Fernsteuereinrichtung FS. Der Kartenleser KL dient in der beschriebenen Weise zur Freigabe des Fernsehgeräts bzw. Fernsprechapparates, dabei kann auf entsprechende Eingabetasten am Bett-Bediengerät BD verzichtet werden, wenn die Ein/Ausschaltung und die Kanalauswahl über die Wähltastatur des Fernsprechgeräts oder über eine Infrarot-Bedieneinrichtung erfolgt. Die Eingabetasten zur Ein/Ausschaltung und zur Kanalauswahl des Fernsehgeräts können auch am Kartenleser KL vorgesehen werden, wobei deren Funktion denjenigen Eingabetasten entspricht, die in der Beschreibung des Bett-Bediengeräts erwähnt wurden. Eine derartige Konfiguration ist vor allem dann anwendbar, wenn das erfindungsgemäße Kommunikationssystem nachträglich oder unabhängig von bereits bei vorhandenen bzw. Bett-Bediengeräten eines anderen Herstellers installiert werden soll.

Wie bereits erwähnt, ist die Datenleitung DL als sogenannte S_{O}-Schnittstelle ausgebildet, diese läßt bekanntlich den Anschluß von bis zu 8 Endgeräten zu, darunter können sich auch maximal zwei Fernsprechapparate befinden, dabei steht für jeden Fernsprechapparat ein Nutzkanal zur Übertragung der Sprachsignale zur Verfügung. In der Regel befinden sich zwei bis drei Fernsprechapparate in einem Patientenzimmer, so daß es unter Berücksichtigung des geringen Fernsprechverkehrs tragbar ist, den Anschluß von maximal vier Fernsprechapparaten zuzulassen. Über das Protokoll auf der Datenleitung DL wird sichergestellt, daß immer nur höchstens zwei Fernsprechapparate gleichzeitig in Betrieb sein können.

Auf den Aufbau und die Wirkungsweise der Datensendeeinrichtung DS wird weiter oben verwiesen.

Die Steuerinformationen von einem Fernsprechapparat FD, die über den Datenkanal in die Fernmeldenebenstellen-Vermittlungsanlage NV gelangen, werden dort in bekannter Weise verarbeitet und dienen zum Auf- und Abbau von Verbindungen, in erster Linie von Fernsprechverbindungen. Über die Wähltastatur ist es jedoch auch möglich, die Kanalauswahl in dem Fernsehgerät TV zu steuern. Dabei gelangt die durch eine Ausscheidungszifffer gekennzeichnete Information in die Steuereinrichtung ST der Fernmeldenebenstellenanlage NV, dort wird anhand der Ausscheidungsziffer festgestellt, daß es sich nicht um eine Fernsprechverbindung handelt, und daß diese Informationen an die zentrale Erfassungs- und Steuereinrichtung EST weiterzugeben sind. Bei einer zentral erfaßten Benutzung des Fernsehgeräts TV wird anhand der Fernsprechapparateadresse, die ebenfalls von der Steuereinrichtung ST der Fernmeldenebenstellen-Vermittlungsanlage NV an die zentrale Erfassungs- und Steuereinrichtung EST übergeben worden ist, ein Speicherbereich angesteuert, welcher für den betreffenden Benutzer reserviert ist. Die Ansteuerung des Speicherbereichs kann auch durch Informationen einer Berechtigungskarte erfolgen, die im Kartenleser KL eingeführt ist und deren Informationen von der Fernsteuereinrichtung FS über die Datenleitung DL, und zwar den Signalisierungskanal zur Steuereinrichtung ST der Fernmeldenebenstellen-Vermittlungsanlage NV übertragen werden. Von dort gelangen die Informationen wiederum an die zentrale Erfassungs- und Steuereinrichtung EST. Nach Abspeichern der Information über den augenblicklichen Zeitpunkt werden von der zentralen Erfassungs- und Steuereinrichtung die entsprechenden Informationen über die Fernmeldenebenstellen-Vermittlungsanlage NV, und zwar den Datenkanal des betreffenden Teilnehmeranschlusses DT zur Fernsteuereinrichtung FS übermittelt, die daraufhin die notwendigen Informationen zur Kanalauswahlsteuerung im Fernsehgerät TV übermittelt und weitere Vorgänge im Zusammenhang mit dem Bett-Bediengerät BD veranlaßt. Zur Vermeidung von Wiederholungen wird auf die nachfolgende Beschreibung verwiesen, da sich die Fernsteuereinrichtung FS gleichermaßen verhält und lediglich im Anschluß der Fernsteuereinrichtung FS und der Fernsprechapparate FD an der Fernmeldenebenstellen-Vermittlungsanlage NV Unterschiede vorhanden sind.

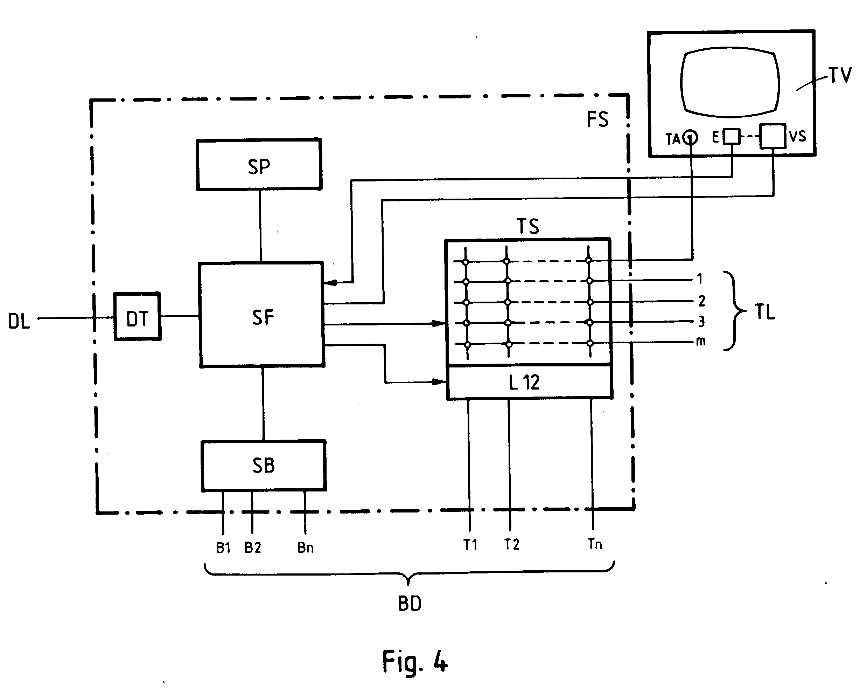

Die Fernsteuereinrichtung FS (s. Fig. 4) weist eine Steuereinrichtung SF auf, an welcher über eine Datenschnittstelle DT die Datenleitung DL angeschlossen ist. Die Bett-Bediengeräte BD sind über Busleitungen B1 bis Bn und eine Busschnittstelle SB mit der Steuereinrichtung SF verbunden, wobei für jedes Bett-Bediengerät BD eine Busleitung B vorgesehen ist. Weiterhin ist ein Tonleitungsschalter TS vorhanden, welcher eine matrixförmige Anordnung von Koppelpunkten aufweist, welche zur Verbindung der Zeilen mit den Spalten dienen. An den Zeilen sind die Tonleitungen 1 bis m und der Tonausgang TA des Fernsehgeräts TV angeschlossen, während die Spalten die zu den Bett-Bediengeräten BD führenden Leitungen T1 bis Tn bilden, an denen Kopfhörer KH (s. Fig. 2) der Bett-Bediengeräte BD angeschlossen sind. Über die Busleitungen B werden in erster Linie Informationen aus dem Speicher einer in einen Kartenleser KL eingeführten Karte zur Steuereinrichtung SF übertragen. Außerdem können über die Busleitung B Tasteninformationen von dem Bett-Bediengerät BD zur Fernsteuereinrichtung FS und in umgekehrter Richtung Steuerinformationen für die Anzeigevorrichtungen des Bett-Bediengeräts BD übertragen werden. Die Steuerung des Tonleitungsschalters TS und der in die Leitungen T1 bis Tn eingeschleifte Lautstärkeregler LR erfolgt durch die Steuereinrichtung SF.

Die Steuereinrichtung SF ist mit einem Speicher SP verbunden, welcher u. a. individuelle Speicherplätze für die einzelnen Bediengeräte BD bzw. Kartenleser KL aufweist. In diesen Speicherbereichen werden beispielsweise der ausgewählte Fernsehkanal, die ausgewählte Tonleitung, die ausgewählte Lautstärke, usw., eingespeichert. Auf weitere Funktionen des Speichers SP wird weiter unten noch eingegangen. Das Fernsehgerät TV weist eine Empfangseinrichtung E für den Empfang drahtloser Steuersignale auf, die beispielsweise von einer Infrarot-Fernbedienungseinrichtung aussgesendet werden. Die Verbindung zwischen der Empfangseinrichtung E und der Steuereinrichtung VS des Fernsehgeräts TV ist in demselben aufgetrennt, dabei ist die Empfangseinrichtung E und die Steuereinrichtung VS mit der Steuereinrichtung SF der Fernsteuereinrichtung FS verbunden, so daß sämtliche Steuersignale, die von einer Fernbedienungseinrichtung ausgesendet werden, von der Steuereinrichtung SF überwacht werden können, bevor sie an die Steuereinrichtung VS des Fernsehgeräts TV weiter gegeben werden.

Die einzelnen Funktionen des erfindungsgemäßen Kommunikationssystems werden nun anhand der Blockschaltbilder gemäß Fig. 1 bis Fig. 4 erläutert. Zunächst wird auf die Funktion der Karte und des Kartenlesers KL eingegangen. Bei den zur Verwendung kommenden Karten kann es sich sowohl um sogenannte Berechtigungskarten als auch um Guthabenkarten für die Benutzer als auch um besondere Karten für das Personal des Krankenhauses handeln, welche die Inanspruchnahme besonderer Dienste ermöglichen. Eine Guthabenkarte enthält in ihrem Speicher die Information über die Höhe eines bestimmten Geldbetrages, der bei Benutzung der Karte entsprechend der Benutzungsdauer verringert wird. Bei einer Berechtigungskarte wird für die Benutzung eines Dienstes ein entsprechendes Guthaben vorausgesetzt, welches in einem, der Karte zugeordneten Speicherplatz eines Speichers der zentralen Erfassungs- und Steuereinrichtung EST eingetragen ist. Unter den angebotenen Diensten sind in erster Linie die Verwendung des Fernsehgeräts TV und die Benutzung des Fernsprechapparates BD, F bzw. FD zu verstehen.

Die Benutzung des Fernsehgeräts TV und auch die Benutzung des Fernsprechapparates ist nur dann möglich, wenn sich eine Karte im Kartenleser KL befindet. Bei der Guthabenkarte wird als Freigabekriterium ein Geldbetrag in einer Mindesthöhe vorausgesetzt. Diese Überprüfung kann in der betreffenden Fernsteuereinrichtung FS vorgenommen werden. Bei Verwendung einer Berechtigungskarte muß diese Prüfung in der zentralen Erfassungs- und Steuereinrichtung EST erfolgen, falls nicht im Speicher SP der betreffenden Fernsteuereinrichtung FS ebenfalls eine Information über die augenblickliche Höhe des Guthabens eingetragen ist.

Bei einer Berechtigungskarte wird eine entsprechende Information über die Identität der in den Kartenleser KL eingeführten Karte von der Fernsteuereinrichtung FS über die Datenleitung DL und die digitale Vermittlungsanlage zur zentralen Erfassungs- und Steuereinrichtung EST übermittelt, wo mit Hilfe dieser Information der der Karte zugeordnete Speicherplatz angesteuert wird. Ist die Information über das Guthaben in der betreffenden Fernsteuereinrichtung FS abgespeichert, dann kann auf die Übermittlung der Information über die Identität der Karte zur zentralen Erfassungs- und Steuereinrichtung verzichtet werden, wenn das Fernsehgerät TV benutzt werden soll. Handelt es sich jedoch um die Benutzung des Fernsprechapparates, welcher am Bediengerät BD (Fig. 1) angeschlossen ist, so wird die Steuereinrichtung ST der digitalen Vermittlungsanlage von der zentralen Erfassungs-und Steuereinrichtung EST durch ein Signal informiert, daß der Fernsprechanschluß freizugeben ist.

Während der Benutzungszeit eines Dienstes wird der Guthabenbetrag auf der Karte bzw. bei einer Berechtigungskarte in der Fernsteuereinrichtung FS bzw. in der zentralen Erfassungs- und Steuereinrichtung EST entsprechend verringert, wobei bei einer Einspeicherung des Guthabenbetrages in der Fernsteuereinrichtung FS am Ende der Benutzung der neue Guthabenbetrag zur Aktualisierung des Speicherinhalts der zentralen Erfassungs- und Steuereinrichtung EST von der Fernsteuereinrichtung FS zu dieser übertragen wird.

Die Kanalauswahl im Fernsehgerät TV und evtl. auch die Lautstärkeeinstellung kann auf drei unterschiedliche Arten erfolgen, und zwar durch eine drahtlose Fernbedienungseinrichtung, durch das Bett-Bediengerät BD, welches zu diesem Zweck mit entsprechenden Bedienungselementen ausgerüstet ist und über die Wähltastatur des Fernsprechapparates, welcher am Bett-Bediengerät BD angeschlossen ist (Fig. 1 ) oder separat im Raum aufgestellt ist (Fig. 2 oder 3). Während in den ersten beiden Fällen die Steuerinformationen von der Fernsteuereinrichtung FS verarbeitet werden, wird die vom Fernsprechapparat ausgesendete Wahlinformation aufgrund der vorangestellten Ausscheidungsziffer von der Fernmeldevermittlungsanlage über den Datenkanal der digitalen Teilnehmeranschlußleitung DA und den digitalen Fernsprechapparat TD der betreffenden Fernsteuereinrichtung FS übermittelt, die sich in dem Raum desjenigen Fernsprechapparates befindet, von welchem die Ausscheidungsziffer und die Kanalauswahlinformation ausgesendet worden ist. Die Überprüfung der Zulässigkeit der Benutzung des Fernsehgeräts kann in diesem Fall in der zentralen Erfassungs- und Steuereinrichtung durchgeführt werden, da dort auch der berechtigungskartenindividuelle Speicherbereich vorhanden ist. Diese Prüfung betrifft allerdings nur die Höhe des Guthabens. Die endgültige Entscheidung über die Zulassung der Benutzung des Fernsehgeräts wird jedoch in der betreffenden Fernsteuereinrichtung FS durchgeführt, da dort die notwendigen Karteninformationen vorliegen, die sonst zur zentralen Erfassungs- und Steuereinrichtung EST übertragen werden müßten. Wie bereits erwähnt, besteht jedoch auch die Möglichkeit, in der betreffenden Fernsteuereinrichtung FS das betreffende Guthaben parallel zu verwalten.

Die Steuerung der Kanalauswahl des Fernsehgeräts und die Ein- und Ausschaltung desselben kann jedoch auch über das Bett-Bediengerät BD erfolgen, dabei werden die Informationen über die Tastenbetätigungen über die Busleitung B der Steuereinrichtung SF der Fernsteuereinrichtung FS übermittelt, die daraufhin entsprechende Signale an die Steuereinrichtung VS des Fernsehgeräts TV sendet, wenn die Überprüfung der Karteninformationen und der Guthabenhöhe ergeben hat, daß eine Benutzung des Fernsehgeräts TV möglich ist. Bisher wurde davon ausgegangen, daß die Steuerung des Tonleitungsschalters und die Kanalauswahl aufgrund von Steuerungsvorgängen erfolgt, die vom Patienten selbst ausgelöst worden sind. Es ist jedoch auch denkbar, von zentraler Stelle aus die betreffende Fernsteuereinrichtung FS zu veranlassen, bestimmte Ton- bzw. Fernsehkanäle gezielt für bestimmte Patienten auszuwählen, beispielsweise im Rahmen einer Therapie. Weiterhin ist es denkbar, für einzelne Patienten bestimmte Informationen auf dem Bildschirm anzeigbar zu machen, und zwar entweder durch Anschaltung des betreffenden Fernsehgeräts an einen besonderen Kanal oder auch durch Anzeige einer Informationen in Form von Videotexts, wobei die Informationen für die Anzeige von einer zentralen Stelle über den bereits beschriebenen Weg zur betreffenden Fernsteuereinrichtung FS übermittelt werden. Begleitet kann dies beispielsweise durch ein in eine laufende Tonübertragung eingeblendetes Aufmerksamkeitszeichen oder auch über einen automatischen Telefonanruf, welcher den betreffenden Patient darauf aufmerksam macht, daß für diesen eine besondere Information auf dem Bildschirm angezeigt wird. Der Patient kann durch die Anzeige auch aufgefordert werden, die Aufnahme der Informationen durch eine Tastenbetätigung zu quittieren, diese kann entweder über die Fernmeldevermittlungsanlage oder auch über die Fernsteuereinrichtung FS über den bereits beschriebenen Weg zur ausendenden zentralen Stelle quittiert werden. Bei diesen Informationen kann es sich beispielsweise um einen Hinweis für einen Patient handeln, sich zu einer bestimmten Zeit zu einer Behandlung in einem bestimmten Raum einzufinden.

Schließlich besteht auch die Möglichkeit der Steuerung des Fernsehgeräts TV durch die Verwendung einer herkömmlichen Fernbedienungseinrichtung, welche aufgrund von Tastenbetätigungen entsprechende Informationen mit Hilfe von Infrarot-Strahlen an die Empfangseinrichtung E des Fernsehgeräts TV sendet. Von dort gelangen diese Informationen an die Steuereinrichtung SF der Fernsteuereinrichtung FS, die in der bereits beschriebenen Weise in Abhängigkeit von den genannten Kriterien die Ein- und Ausschaltung und die Kanalauswahl des Fernsehgeräts TV steuert.

Zur Programmierung von Video-Recordern sind sogenannte Lesestifte bekannt, welche Balkencode-Informationen in entsprechende elektrische Signale umwandeln, welche in einem Speicher des Lesestifts eingespeichert sind und die auf Tastendruck am Lesestift von diesem in Form von Infrarot-Signalen ausgesendet werden können. Anstelle der in der Beschreibung der Fig. 1 bzw. Fig. 3 erwähnten Datensendeeinrichtung DS ist es auch möglich, daß die mit einem derartigen Lesestift aufgenommenen Informationen drahtlos von diesem zur Empfangseinrichtung E des Fernsehgeräts TV übermittelt werden und von dort in die Steuereinrichtung SF der Fernsteuereinrichtung FS gelangen. Durch entsprechende Kennzeichnung der unterschiedlichen Informationen, die von einer Fernbedienungseinrichtung bzw. von einem Lesestift kommen, ist die Steuereinrichtung SF in der Lage, die Informationen entsprechend auszuwerten, so daß die von einem Lesestift ausgesendeten Informationen über die Datenleitung DL zur zentralen Erfassungs- und Steuereinrichtung gesendet werden können, wo diese beispielsweise zur Einrichtung eines kartenindividuellen Speicherbereichs dienen, der einem bestimmten Patienten zugeordnet ist und in welchem auch weitere Patientendaten abgelegt werden können, wie dies weiter oben im Zusammenhang mit dem Lesestift in Verbindung mit der Fig. 1 beschrieben worden ist.

Es wurde bereits erwähnt, daß neben der Guthaben- und der Berechtigungskarte auch noch weitere besondere Karte vorhanden sein können, welche dem Personal bzw. den Ärzten vorbehalten sind. Die besondere Karte für das Personal kann beispielsweise einer Schwester das kostenlose Führen von Ferngesprächen gestatten, wobei die freigegebenen Rufnummern auf der Karte selbst eingespeichert sein können. Wird eine derartige Karte in den Kartenleser eingeführt, so sind diese freigegebenen Rufnummern über die Datenleitung DL an die zentrale Erfassungs- und Steuereinrichtung zu übermitteln, wo diese nach einer Überprüfung der Kartenidentität an die Fernmeldevermittlungsanlage weiter gegeben werden. Dort findet ein Vergleich der gewählten Rufnummer mit den freigegebenen Rufnummern statt, so daß nur bei einer Übereinsstimmung eine Gesprächsverbindung durchgeschaltet wird.

Es besteht auch die Möglichkeit, auf dieser Karte die Informationen einzuspeichern, welche die Patienten über den Speiseplan des Tages informieren. Nach Einführen der Karte in den Kartenleser gelangt die dort eingespeicherte Information in bereits beschriebener Weise an die Steuereinrichtung SF der Fernsteuereinrichtung FS, welche daraufhin das Fernsehgerät TV entsprechend ansteuert, so daß der Speiseplan auf dem Bildschirm desselben angezeigt wird. Die von jedem Patienten ausgewählten Speisen können über Balkencode-Informationen wiederum vom Lesestift aufgenommen und in der bereits beschriebenen Weise zur zentralen Erfassungs- und Steuereinrichtung EST gesendet werden. Dort findet eine entsprechende Auswertung der Informationen statt, so daß auf einem nicht gezeigten Drucker ein Ausdruck über die Anzahl der benötigten einzelnen Speisen für die Küche und für die einzelnen Stationen ein Speisenverteilungsplan nach Zimmern und Patienten erstellt werden kann.

Für Ärzte kann die besondere Karte dazu verwendet werden, in der Fernsteuereinrichtung FS die Anzeige von Krankenblättern, Diagnosen, Röntgenbildern, usw., auf dem Bildschirm des Fernsehgeräts TV freizugeben, wobei die Steuereinrichtung SF über die Datenleitung DL den Verbindungsaufbau zu entsprechenden Datenbanken, die an der Fernmeldevermittlungsanlage angeschlossen sind, veranlaßt. Die Steuereinrichtung SF kann auch mit einem nicht gezeigten Anschluß für ein tragbares Datenverarbeitungsgerät (Lap-Top) versehen sein, so daß der Arzt oder auch Wartungspersonal ein derartiges Gerät an der Fernsteuereinrichtung FS anschließen kann. Der Arzt kann über das tragbare Datenverarbeitungsgerät Daten abrufen und auf demselben anzeigen lassen und auch Daten aktualisieren, während das Wartungspersonal die tragbare Datenverarbeitungseinrichtung zur Überprüfung der Funktionsfähigkeit der Fernsteuereinrichtung FS, zum Einschreiben und Auslesen von Daten oder Befehlsfolgen, usw., verwenden kann. Durch die Ausgabe unterschiedlicher besonderer Karten für Schwestern, Ärzte und Wartungspersonal wird sichergestellt, daß in Abhängigkeit von der jeweiligen Karte der Zugriff zu bestimmten Daten und Datenbanken freigegeben oder gesperrt werden kann.

Es ist auch denkbar, in den Speicher SP der Steuereinrichtung SF der Fernsteuereinrichtung FS Informationen einzuspeichern, welche auf dem Bildschirm des Fernsehgeräts TV angezeigt werden, beispielsweise in der Art des Videotextes. Die notwendigen Informationen, die von der zentralen Erfassungs- und Steuereinrichtung EST oder auch aus einer Datenbank übermittelt werden, gelangen über den Datenkanal oder bei großen Datenmengen auch über den Sprachkanal über die Vermittlungsanlage zur Fernsteuereinrichtung FS über die Datenleitung DL, dabei können sowohl sämtliche Fernsteuereinrichtungen FS als auch gezielt bestimmte Fernsteuereinrichtungen FS mit den entsprechenden Informationen versorgt werden, die auch für eine spätere Anzeige dort eingespeichert werden können. .

## Patentansprüche

1. Kommunikationssystem für Krankenhäuser und Pflegeheime bestehend aus einer Vielzahl von raumindividuellen Fernsteuereinrichtungen, die über digitale Teilnehmeranschlüsse einer digitalen Fernmeldevermittlungsanlage mit einer zentralen Erfassungs- und Steuereinrichtung verbindbar sind, wobei die jeweils einem im Raum befindlichen Fernsehgerät zugeordnete Fernsteuereinrichtung zur Auslösung von Steuervorgängen in demselben dient, die vom Benutzer beispielsweise über die Wähltastatur eines an der Fernmeldevermittlungsanlage angeschlossenen Fernsprechapparates veranlaßt werden, und die Dauer der Benutzung patientenindividuell erfaßbar ist,
**dadurch gekennzeichnet,**
daß die Fernsteuereinrichtungen (FS1 bis FSx) mehrerer Räume über eine gemeinsame Datenleitung (DL) jeweils mit einem digitalen Fernsprechapparat (TD) verbunden sind, daß die jeweils als analoge Fernsprechapparate (BD, F) ausgebildeten benutzerindividuellen Fernsprechapparate an der digitalen Fernmeldevermittlungsanlage (V) über eine analoge Teilnehmeranschlußleitung angeschlossen sind und daß jeweils ein einem analogen Fernsprechapparat zugeordneter Kartenleser (KL) an der Fernsteuereinrichtung angeschlossen ist.

2. Kommunikationssystem für Krankenhäuser und Pflegeheime bestehend aus einer Vielzahl von raumindividuellen Fernsteuereinrichtungen, die über digitale Teilnehmeranschlüsse einer digitalen Fernmeldevermittlungsanlage mit einer zentralen Erfassungs- und Steuereinrichtung verbindbar sind, wobei die jeweils einem im Raum befindlichen Fernsehgerät zugeordnete Fernsteuereinrichtung zur Auslösung von Steuervorgängen in demselben dient, die vom Benutzer beispielsweise über die Wähltastatur eines an der Fernmeldevermittlungsanlage angeschlossenen Fernsprechapparates veranlaßt werden und die Dauer der Benutzung benutzerindividuell erfaßbar ist,
**dadurch gekennzeichnet,**
daß eine Umsetzeinrichtung (U) als Endeinrichtung mit dem digitalen Teilnehmeranschluß (DT) einer digitalen Fernmeldenebenstellen-Vermittlungsanlage (NV) verbunden ist, daß eine Fernsteuereinrichtung (FS) und mehrere digitale Fernsprechapparate (FD1 bis FDn) jeweils über eine gemeinsame Datenleitung an der Umsetzeinrichtung (U) angeschlossen sind und daß jeweils ein einem digitalen Fernsprechapparat (FD) zugeordneter Kartenleser (KL) an der Fernsteuereinrichtung (FS) angeschlossen ist.

3. Kommunikationssystem nach Anspruch 2,
**dadurch gekennzeichnet,**
daß die Umsetzeinrichtung (U) auf der Vermittlungsseite eine U_{PO}-Schnittstelle und auf der Anschlußseite der Datenleitung (DL) eine S_{O}-Schnittstelle aufweist.

4. Kommunikationssystem nach einem der Ansprüche 1 bis 3,
**dadurch gekennzeichnet,**
daß in Abhängigkeit von Informationen einer in einen Kartenleser (KL) eingeführten Karte eine benutzerindividuelle Benutzung des Fernsehgeräts (TV) oder eines dem Kartenleser zugeordneten Fernsprechapparates freigebbar ist.

5. Kommunikationssystem nach einem der Ansprüche 1 bis 4,
**dadurch gekennzeichnet,**
daß an einer Fernsteuereinrichtung (FS) jeweils mehrere Bett-Bediengeräte (BD) angeschlossen sind.

6. Kommunikationssystem nach einem der Ansprüche 1 bis 5,
dadurch gekennzeichnet,
daß der Kartenleser (KL) und der Fernsprechapparat einen Teil des Bett-Bediengeräts (BD) bilden.

7. Kommunikationssystem nach einem der Ansprüche 1 oder 6,
**dadurch gekennzeichnet,**
daß der Kartenleser (KL) Bedienungselemente für Steuerung des Fernsehgeräts (TV) aufweist.

8. Kommunikationssystem nach einem der Ansprüche 1 bis 7,
**dadurch gekennzeichnet,**
daß an der gemeinsamen Datenleitung (DL) eine Datensendeeinrichtung (DS) angeschlossen ist, welche die von einem Lesestift aufgenommenen Informationen selbsttätig an die zentrale Erfassungs- und Steuereinrichtung (EST) sendet.

9. Kommunikationssystem nach einem der Ansprüche 1 bis 8,
**dadurch gekennzeichnet,**
daß Informationen über Guthaben von Geldbeträgen karten- bzw. kartenleser-individuell in der zentralen Erfassungs- und Steuereinrichtung (EST) abgelegt sind.

10. Kommunikationssystem nach Anspruch 9,
**dadurch gekennzeichnet,**
daß die Informationen parallel in der Fernsteuereinrichtung (FS) verwaltet werden.

11. Kommunikationssystem nach einem der Ansprüche 1 bis 11,
**dadurch gekennzeichnet,**
daß in der Fernsteuereinrichtung (FS) eingespeicherte Bildinformationen auf dem Bildschirm des Fernsehgeräts (TV) anzeigbar sind.

12. Kommunikationssystem nach Anspruch 1, 2 oder 4,
**dadurch gekennzeichnet,**
daß die Bildinformationen in der zentralen Erfassungs- und Steuereinrichtung (EST) eingespeichert sind und auf Veranlassung derselben an eine oder mehrere Fernsteuereinrichtungen (FS) übermittelt werden.

13. Kommunikationssystem nach einem der Ansprüche 1, 2 oder 4,
**dadurch gekennzeichnet,**
daß die Bildinformationen auf der Karte (K) eingespeichert sind und der Fernsteuereinrichtung (FS) übermittelt werden.

14. Kommunikationssystem nach einem der Ansprüche 1 bis 13,
**dadurch gekennzeichnet,**
daß die Fernsteuereinrichtung (FS) eine oder mehrere Schnittstellen zum Anschluß eines tragbaren Datenverarbeitungsgeräts aufweist.

15. Kommunikationssystem nach Anspruch 1 oder 2, bei welchem das Fernsehgerät eine drahtlose Empfangseinrichtung aufweist, die mit dessen Steuereinrichtung verbunden ist,
**dadurch gekennzeichnet,**
daß die Verbindung zwischen drahtloser Empfangseinrichtung (E) und Steuereinrichtung (VS) des Fernsehgeräts (TV) unterbrochen und daß die Empfangseinrichtung (E) mit der Fernsteuereinrichtung (FS) verbunden ist.

## Claims

1. Communication system for hospitals and nursing homes, comprising a multiplicity of remote control devices which are individual to rooms and which can be connected via digital subscriber connections of a digital telecommunications switching system to a central registration and control device, the remote control device assigned in each case to a television set located in the room being used for the initiation of control processes in said television set, said control processes being caused by the user, for example via the dial pad of a telephone connected to the telecommunications switching system, and the duration of the use being able to be registered individually for each patient, characterized in that the remote control devices (FS1 to FSx) of a plurality of rooms are in each case connected via a common data line (DL) to a digital telephone (TD), in that the telephones, which are individual to each user and are designed in each case as analogue telephones (BD, F), are connected to the digital telecommunications switching system (V) via an analogue subscriber connection line, and in that in each case a card reader (KL) assigned to an analogue telephone is connected to the remote control device.

2. Communication system for hospitals and nursing homes, comprising a multiplicity of remote control devices which are individual to rooms and which can be connected via digital subscriber connections of a digital telecommunications switching system to a central registration and control device, the remote control device assigned in each case to a television set located in the room being used for the initiation of control processes in said television set, said control processes being caused by the user, for example via the dial pad of a telephone connected to the telecommunications switching system, and the duration of the use being able to be registered individually for each user, characterized in that a conversion device (U) is connected as final device to the digital subscriber connection (DT) of a digital telecommunications private branch exchange (NV), in that a remote control device (FS) and a plurality of digital telephones (FD1 to FDn) are in each case connected via a common data line to the conversion device (U), and in that in each case a card reader (KL) assigned to a digital telephone (FD) is connected to the remote control device (FS).

3. Communication system according to Claim 2, characterized in that the conversion device (U) has, on the exchange side, a U_{PO} interface and, on the connection side of the data line (DL), a S_{O} interface.

4. Communication system according to one of Claims 1 to 3, characterized in that, depending on information from a card inserted into a card reader (KL), a user-individual use of the television set (TV) or of a telephone assigned to the card reader can be enabled.

5. Communication system according to one of Claims 1 to 4, characterized in that in each case a plurality of bedside operating sets (BD) are connected to one remote control device (FS).

6. Communication system according to one of Claims 1 to 5, characterized in that the card reader (KL) and the telephone form part of the bedside operating set (BD).

7. Communication system according to one of Claims 1 or 6, characterized in that the card reader (KL) has operating elements for the control of the television set (TV).

8. Communication system according to one of Claims 1 to 7, characterized in that, connected to the common data line (DL), there is a data transmitting device (DS) which automatically transmits to the central registration and control device (EST) the information picked up by a light pen.

9. Communication system according to one of Claims 1 to 8, characterized in that information about the credit of amounts of money individual to cards or card readers is stored in the central registration and control device (EST).

10. Communication system according to Claim 9, characterized in that the information is managed in parallel in the remote control device (FS).

11. Communication system according to one of Claims 1 to 11, characterized in that image information stored in the remote control device (FS) can be displayed on the screen of the television set (TV).

12. Communication system according to Claim 1, 2 or 4, characterized in that the image information is stored in the central registration and control device (EST) and, when caused to do so by the latter, is transmitted to one or more remote control devices (FS).

13. Communication system according to one of Claims 1, 2 or 4, characterized in that the image information is stored on the card (K) and is transmitted to the remote control device (FS).

14. Communication system according to one of Claims 1 to 13, characterized in that the remote control device (FS) has one or more interfaces for the connection of a portable data processing appliance.

15. Communication system according to Claim 1 to 2, in which the television set has a wire-free receiving device which is connected to its control device, characterized in that the connection between the wire-free receiving device (E) and the control device (VS) of the television set (TV) is interrupted, and in that the receiving device (E) is connected to the remote control device (FS).

## Revendications

1. Système de communication pour hôpitaux et maisons de soins consistant en une multiplicité de dispositifs de télécommande propres à chaque chambre, qui peuvent être reliés au moyen de raccordements numériques d'usagers à une installation numérique de groupe d'arrivée de télécommunication avec un système central de détection et de commande, système dans lequel le dispositif de télécommande qui correspond respectivement à un appareil de télévision qui se trouve dans la chambre sert à déclencher des processus de commande dans la même chambre, processus qui sont déclenchés par l'usager par exemple au moyen du clavier sélectif de numérotage d'un appareil de téléphone raccordé à l'installation de groupe d'arrivée de télécommunication ou par satellite et dans lequel la durée d'utilisation peut être enregistrée individuellement par patient, système de communication caractérisé en ce que les dispositifs de télécommande (FS1 à FSx) de plusieurs chambres sont reliés au moyen d'une ligne commune de données (DL) respectivement à un appareil de téléphone numérique (TD), en ce que les appareils de téléphone propres à chaque utilisateur constitués respectivement sous la forme d'appareils de téléphone analogiques (BD, F) sont raccordés à l'installation numérique de groupe d'arrivée de télécommunication (V) au moyen d'une ligne analogique de raccordement à l'usager et en ce que respectivement un lecteur de carte, correspondant à un appareil de téléphone analogique (K4) est raccordé au dispositif de télécommande.

2. Système de communication pour hôpitaux et maisons de soins consistant en une multiplicité de dispositifs de télécommande propres à chaque chambre, qui peuvent être reliés au moyen de raccordements numériques d'usagers à une installation numérique de groupe d'arrivée de télécommunication avec un système central de détection et de commande, système dans lequel le dispositif de télécommande qui correspond respectivement à un appareil de télévision qui se trouve dans la chambre sert à déclencher des processus de commande dans la même chambre, processus qui sont déclenchés par l'usager par exemple au moyen du clavier sélectif de numérotage d'un appareil de téléphone raccordé à l'installation de groupe d'arrivée et dans lequel la durée d'utilisation peut être enregistrée individuellement par patient, système de communication caractérisé en ce qu'un système de conversion (U) est relié en tant que système terminal au raccordement numérique (FD) de l'usager (DT) d'une installation numérique de groupe d'arrivée de centre annexe de télécommunication (NV), en ce qu'un dispositif de télécommande (FS) et plusieurs appareils de téléphone numériques (FD1 à FDn) sont raccordés respectivement au moyen d'une ligne commune de données au système de conversion (U) et en ce qu'un lecteur de cartes (KL) correspondant à un appareil de téléphone numérique (FD) est raccordé au dispositif de télécommande (FS).

3. Système de communication selon la revendication 2, caractérisé en ce que le système de conversion (U) présente du côté du groupe d'arrivée une interface U_{PO} et du côté du raccordement de la ligne de données (DL) une interface S_{O}.

4. Système de communication selon l'une des revendications 1 à 3, caractérisé en ce qu'en fonction des informations d'une carte introduite dans un lecteur de cartes (KL) on peut libérer l'usage individuel propre à chaque usager de l'appareil de télévision (TV) ou d'un appareil de télévision associé au lecteur de cartes.

5. Système de communication selon l'une des revendications 1 à 4, caractérisé en ce que respectivement plusieurs appareils de manoeuvre de lit (BD) sont raccordés à un dispositif de télécommande (FS).

6. Système de communication selon l'une des revendications 1 à 5, caractérisé en ce que le lecteur de cartes (KL) et l'appareil de téléphone constitue une partie de l'appareil de manoeuvre de lit (BD).

7. Système de communication selon l'une des revendications 1 ou 6, caractérisé en ce que le lecteur de cartes (KL) présente des éléments de manoeuvre pour commander l'appareil de télévision (TV).

8. Système de communication selon l'une des revendications 1 à 7, caractérisé en ce qu'à la ligne commune de données (DL) est raccordé un système d'envoi de données (DS), qui envoie les informations reçues à partir d'un crayon de lecture automatiquement au dispositif central d'enregistrement et de commande (EST).

9. Système de communication selon l'une des revendications 1 à 8, caractérisé en ce que l'on dépose dans le dispositif central d'enregistrement et de commande (EST) des informations sur le montant des crédits propre à chaque carte ou à chaque lecteur de cartes.

10. Système de communication selon la revendication 9, caractérisé en ce que les informations sont gérées en parallèle dans le dispositif de télécommande (FS).

11. Système de communication selon l'une des revendications 1 à 11, caractérisé en ce que l'on peut indiquer des informations mises en mémoire dans le dispositif de télécommande (FS) sur l'écran de l'appareil de télévision (TV).

12. Système de communication selon la revendication 1, 2 ou 4, caractérisé en ce que les informations sont mises en mémoire dans le dispositif central d'enregistrement et de commande (EST) et sont transmises en activant celui-ci à un ou plusieurs dispositifs de télécommande (FS).

13. Système de communication selon l'une des revendications 1, 2 ou 4, caractérisé en ce que les informations sont mises en mémoire sur la carte (K) et sont transmises au dispositif de télécommande (FS).

14. Système de communication selon l'une des revendications 1 à 13, caractérisé en ce que le dispositif de télécommande (FS) présente une ou plusieurs interfaces pour le raccordement d'un appareil de traitement de données portable.

15. Système de communication selon la revendication 1 ou 2, dans lequel l'appareil de télévision présente un dispositif de réception sans fil, qui est relié à son dispositif de commande, caractérisé en ce que la liaison entre le dispositif de réception sans fil (E) et le dispositif de commande (VS) de l'appareil de télévision (TV) est interrompue et en ce que le dispositif de réception (E) est relié au dispositif de télécommande (FS).
